# FASCICULE DE BREVET EUROPEEN

(11) **EP 2 098 425 B1**
(45) Date de publication et mention de la délivrance du brevet: **03.08.2011**
(21) Numéro de dépôt: 09154148.2
(22) Date de dépôt: 02.03.2009
(51) Int. Cl.: B60T 8/48, B60T 8/44

(54) **Systèmes de freinage permettant la mise en oeuvre d'un procédé de contrôle de stabilité et de trajectoire**
Bremssysteme, die die Ausführung eines Stabilitäts- und Bewegungsbahnsteuerverfahrens erlauben
Braking systems allowing the execution of a method for controlling the stability and trajectory

(30) Priorité: 03.03.2008 FR 0851358
(43) Date de publication de la demande: 09.09.2009
(73) Titulaire: PEUGEOT CITROËN AUTOMOBILES S.A., 78140 Vélizy Villacoublay (FR)
(72) Inventeur: Zink, Eric, 92700 COLOMBES (FR); Blanc, Fabrice, 38080 L'ISLE D'ABEAU (FR)

(56) Documents cités:
- EP-A- 0 410 891
- WO-A-96/10507
- WO-A-97/35753
- WO-A-97/48584
- FR-A- 2 509 243
- FR-A- 2 606 720

## Description

La présente invention se situe dans le domaine des systèmes de freinage de véhicule automobile.

De manière plus précise, la présente invention concerne un système de freinage à commande hydraulique, permettant la mise en oeuvre d'un procédé de contrôle de stabilité et de trajectoire.

Un système de freinage hydraulique, commandé par un conducteur du véhicule, comporte généralement les éléments suivants :
- un élément d'amplification, permettant d'augmenter un effort exercé sur une pédale de frein par un conducteur, appelé effort pédale. Cet élément d'amplification est, par exemple, un élément de type servofrein ou booster, qui utilise la différence de pression entre la pression atmosphérique et une source de vide, ou un amplificateur hydraulique.
- un maître-cylindre tandem, qui consiste en une pompe à piston utilisée pour transformer l'effort pédale en pression hydraulique ; à cet effet, le maître-cylindre tandem est en communication avec un réservoir de liquide de frein et
- des récepteurs situés au niveau des roues, et destinés, dans le cas de freins à disque, à transformer la pression hydraulique en effort presseur entre les plaquettes de frein et le disque.

En outre, un tel système de freinage comporte un circuit de freinage comportant un ensemble de canalisations hydrauliques destinées à relier les différents éléments du freinage, et à permettre la circulation du liquide de frein sous pression.

Ces systèmes de freinage, bien qu'efficaces au niveau de l'arrêt des roues en lui-même, ne permettent pas de résoudre les problèmes de perte de contrôle, de stabilité ou de trajectoire pouvant survenir lorsqu'un véhicule roule dans certaines conditions particulières, par exemple sur une chaussée endommagée ou glissante (neige, pluie, verglas, boue, etc.), ou à une vitesse trop élevée, ou lorsque le conducteur est amené à freiner ou changer de direction brusquement.

Différents systèmes ont donc été conçus par les constructeurs automobiles pour remédier à ces inconvénients.

Un premier type de système vise à éviter le blocage des roues lorsqu'un conducteur freine brusquement, afin de maintenir une bonne adhérence des roues sur la chaussée en toutes circonstances. Le principe de tels systèmes, notamment les systèmes dits ABS (AntiBlockieren System, ou Antilock Braking System), est d'utiliser des électrovannes et des pompes hydrauliques pour diminuer la pression de freinage appliquée sur une roue, dès lors qu'un risque de blocage de cette roue est détecté. Un tel système comprend, par exemple, un capteur de vitesse installé sur chaque roue, et deux électrovannes par roue, pour permettre ce contrôle de pression.

On connaît également des systèmes électroniques de contrôle de stabilité et de trajectoire, notamment les systèmes dits ESC (Electronic Stability Control), dont l'objectif est de moduler le couple de freinage appliqué à une roue si une unité de contrôle électronique en charge de la commande du système détecte qu'une consigne conducteur est inexistante, insuffisante ou au contraire trop importante, au regard d'une situation de stabilité du véhicule, cette situation étant déterminée à partir de mesures effectuées par différents capteurs installés dans le véhicule.

Afin de pouvoir procéder à cette augmentation ou génération de couple de freinage sans action du conducteur sur la pédale, on a envisagé l'installation d'un deuxième système de gestion du freinage, installé dans le système de freinage, et indépendant de tout effort du conducteur sur la pédale de frein. La mise en oeuvre d'un tel système de gestion est commandée, le cas échéant, par l'unité de contrôle électronique.

On connait ainsi des documents FR2606720 et WO96/10507, un système de freinage à commande hydraulique, destiné à être installé dans un véhicule automobile, comprenant :
- au moins un circuit d'admission et d'échappement de liquide de frein relié à un élément de frein (9) installé sur une roue du véhicule,
- un premier système de gestion du freinage, commandé par un conducteur du véhicule via un dispositif de commande installé dans l'habitacle du véhicule, et relié à un réservoir (12) de liquide de frein,
- un deuxième système de gestion du freinage, commandé par une unité de contrôle électronique installée dans le véhicule et comportant un accumulateur haute pression (19, 20) de liquide de frein, relié au circuit d'échappement et d'admission du liquide de frein, via un circuit de freinage comprenant des canalisations hydrauliques.

Un tel deuxième système de gestion du freinage est muni d'une pompe hydraulique, permettant, en cas d'action insuffisante ou inexistante d'un conducteur sur la pédale, de faire circuler du liquide de frein sous pression vers un ou plusieurs étriers de frein, de manière à freiner une ou plusieurs roues du véhicule.

Généralement, un système de freinage muni d'un contrôle de stabilité et de trajectoire de type ESC, permet également la mise en oeuvre d'un système antiblocage de roues, par exemple de type ABS, car les éléments utilisés pour augmenter la pression de freinage sur chaque roue peuvent être utilisés, à l'inverse, pour diminuer cette pression, et ainsi permettre le déblocage d'une roue.

Un système de ce type est relativement efficace pour remédier aux pertes de stabilité pouvant survenir dans un véhicule. Toutefois, les éléments formant le deuxième système de gestion du freinage sont généralement coûteux, ce qui empêche l'installation de ce système de manière généralisée sur les véhicules produits par les constructeurs automobile à l'heure actuelle.

En outre, une pompe hydraulique est un élément dont la mise en marche est relativement longue, ce qui diminue la réactivité d'un système de freinage mettant en oeuvre une telle pompe. Ce manque de réactivité peut s'avérer pénalisant dans des situations de freinage d'urgence, au cours desquelles il est nécessaire de fournir une forte pression de manière quasi-instantanée pour permettre un freinage rapide d'une ou plusieurs roues.

La présente invention vise donc à fournir un système de freinage, permettant la mise en oeuvre d'un procédé de contrôle de stabilité, qui soit moins coûteux à installer et plus réactif que les dispositifs existants.

Parmi les différents éléments compris dans les systèmes existants, la pompe hydraulique représente le composant le plus coûteux du bloc hydraulique. Par ailleurs, ainsi que mentionné précédemment, on a constaté que cette pompe était également le composant présentant la réactivité la plus lente.

En conséquence, l'invention part de l'idée que la suppression d'une telle pompe permettrait de diminuer les coûts de ces systèmes, et ainsi de les installer en série sur de nombreux véhicules.

Le rôle de la pompe hydraulique est de fournir, dans un système de gestion du freinage mettant en oeuvre un procédé ESC, l'énergie nécessaire pour assurer les montées en pression du circuit de freinage indépendamment des actions du conducteur, lorsqu'une unité de contrôle électronique détermine que de telles montées sont nécessaires. L'invention vise donc à fournir un système de freinage muni d'un système de contrôle de stabilité et de trajectoire, dans lequel les montées en pression sont assurées par des éléments mécaniques moins coûteux qu'une pompe hydraulique.

De manière plus précise, l'invention concerne un système de freinage à commande hydraulique, destiné à être installé dans un véhicule automobile, comprenant :
- au moins un circuit d'admission et d'échappement de liquide de frein, relié à un élément de frein installé sur une roue du véhicule,
- un premier système de gestion du freinage, commandé par un conducteur du véhicule via un dispositif de commande installé dans l'habitacle du véhicule, et relié à un réservoir de liquide de frein, et
- un deuxième système de gestion du freinage, commandé par une unité de contrôle électronique installée dans le véhicule.

Ledit deuxième système de gestion du freinage comporte un accumulateur haute pression de liquide de frein, relié au circuit d'échappement et d'admission du liquide de frein, via un circuit de freinage comprenant des canalisations hydrauliques.

Cet système de freinage est caractérisé en ce que le deuxième système de gestion du freinage comporte :
- un amplificateur hydraulique, positionné en parallèle du système de canalisations hydrauliques, et
- un moyen de dérivation du liquide, pour dériver du liquide de frein issu de l'accumulateur vers l'amplificateur lorsque la pression disponible dans l'accumulateur est insuffisante par rapport à une pression nécessaire dans l'élément de frein pour assurer la stabilité du véhicule.

Le moyen de dérivation du liquide est, de préférence, commandé par l'unité de contrôle électronique du véhicule.

On précise tout d'abord que, dans la suite de la description, on désignera par « circuit de freinage » l'ensemble des canalisations hydrauliques permettant la circulation du liquide de frein des premier et deuxième systèmes de gestion de freinage vers le ou les circuits d'admission et d'échappement reliés aux différents éléments de frein.

Le dispositif permettant au conducteur de commander le premier système de gestion de freinage est, par exemple, une pédale de frein, ou tout autre actionneur électrique ou mécanique installé dans le véhicule et permettant de transmettre une information de commande au système de freinage.

Dans un système selon l'invention, l'énergie nécessaire aux montées en pression du circuit de freinage indépendamment d'une action conducteur est fournie par l'accumulateur haute pression de liquide de frein, c'est à dire un accumulateur permettant le stockage de liquide sous des pressions de l'ordre de 30 à 70 bars. Cette énergie nécessaire est déterminée dans le cadre du contrôle de stabilité mis en oeuvre par un calculateur électronique installé dans le véhicule. Différents types d'accumulateurs pouvant être utilisés dans cette invention seront décrits ultérieurement.

La pression fournie par l'accumulateur haute pression étant généralement issue d'un rechargement effectué par le biais d'une action conducteur, elle est parfois insuffisante par rapport à la pression requise pour le freinage d'une roue. Il est donc nécessaire de disposer en outre d'un amplificateur hydraulique qui comporte, généralement, un piston à deux têtes de surface différentes, et tel qu'un déplacement du piston sous l'effet d'une pression Pᵢₙₜᵢₐₗₑ appliquée en entrée sur la tête de plus grande surface induise une pression P_{finale} plus grande que la pression Pᵢₙᵢₜᵢₐₗₑ, en sortie du côté de la tête de plus petite surface.

De manière avantageuse, les deux têtes de piston sont circulaires, et ont chacune un diamètre différent, de manière à former une surface différente.

Un tel amplificateur nécessite un débit important en entrée pour obtenir un débit et une pression suffisants en sortie. En conséquence, cet amplificateur est, dans un système selon l'invention, installé en parallèle du circuit reliant l'accumulateur haute pression au frein, de manière à n'être mis en oeuvre que lorsque la pression disponible grâce à l'accumulateur haute pression est insuffisante.

Dans une réalisation, un système selon l'invention comprend un dispositif de pilotage, commandé par l'unité de contrôle électronique, permettant l'activation de l'un et/ou l'autre des systèmes de gestion du freinage, en fonction de paramètres reflétant un état du véhicule et une action conducteur. Un tel dispositif de pilotage comporte, préférentiellement, une ou plusieurs électrovannes installée(s) dans le circuit de freinage.

Ce dispositif de pilotage permet, par exemple, d'activer le deuxième système de gestion de freinage dès que l'unité de contrôle électronique détermine qu'il est nécessaire, pour la mise en oeuvre du contrôle de stabilité, d'utiliser une source d'énergie autre que l'action conducteur.

Dans une réalisation avantageuse, le circuit de freinage comporte une liaison entre le premier et le deuxième systèmes de gestion de freinage, permettant un rechargement, total ou partiel, de l'accumulateur haute pression de liquide de frein du deuxième système et une remise en position de l'amplificateur hydraulique dans l'état où il se trouvait avant la mise en oeuvre du deuxième système, lors d'une commande du conducteur sur le premier système.

Une remise en position de l'amplificateur hydraulique consiste en une remise en butée du piston sur la tête de plus grande surface. Cette remise en butée a pour conséquence l'échappement de liquide de frein de cet amplificateur.

Afin de récupérer ce liquide de frein, le système de canalisations hydrauliques comporte, dans une réalisation, une liaison entre l'amplificateur hydraulique et le réservoir de liquide de frein, permettant une circulation de liquide de l'amplificateur vers le réservoir lors d'une remise en position initiale de l'amplificateur.

On rappelle que la description est ici effectuée pour une seule diagonale du véhicule, c'est-à-dire pour un circuit de freinage desservant deux roues. Une description similaire pourrait être effectuée pour un circuit de freinage desservant les deux autres roues du véhicule. Dans certaines réalisations, la liaison ci-dessus décrite est commune aux deux circuits de freinage.

Toutefois, dans certaines configurations, la présence d'une telle liaison hydraulique rend difficile l'intégration du deuxième système de gestion de freinage dans un véhicule. En conséquence, dans une autre réalisation, le circuit de freinage comporte une liaison entre l'amplificateur hydraulique et un accumulateur basse pression de liquide de frein, permettant un stockage temporaire de liquide issu de l'amplificateur hydraulique lors d'une remise en position de ce dernier.

De préférence, dans cet accumulateur basse pression, le liquide est stocké sous une pression de l'ordre de 0 à 20 bars. Cet accumulateur basse pression est, dans une configuration avantageuse, installé en sortie du ou des circuits d'échappement relié(s) aux différents éléments de frein.

Les accumulateurs hydrauliques mis en oeuvre dans ce système de freinage peuvent être de plusieurs types, notamment :
- un accumulateur à membrane, comportant un volume présentant deux compartiments séparés par une membrane. Un premier compartiment, totalement isolé de l'extérieur de l'accumulateur, est empli de gaz sous pression, par exemple du diazote (N₂). Un deuxième compartiment est muni d'un orifice d'admission et d'échappement de fluide. Lorsque le fluide entre dans la sphère, la membrane se déforme en comprimant le gaz, ce qui permet un stockage d'énergie sous forme potentielle.
- un accumulateur à piston comportant un piston installé dans un corps de piston, par exemple cylindrique, et un ressort comprimé lors d'une accumulation de liquide de frein dans la chambre de l'accumulateur, permettant ainsi un stockage d'énergie potentielle.

Le caractère « haute pression » ou « basse pression » d'un accumulateur dépend de ses paramètres physiques, tels que la pression initiale du gaz dans un accumulateur à membrane, ou la raideur du ressort dans un accumulateur à piston.

Ainsi que mentionné précédemment, lorsque le deuxième système de gestion de freinage n'est pas activé, il est généralement isolé du reste du système de freinage, notamment par la fermeture d'électrovanne(s) appartenant au dispositif de pilotage. Toutefois, de telles électrovannes ne présentent pas toujours une étanchéité parfaite, ce qui peut conduire à des fuites de liquide même lorsqu'elles se trouvent à l'état fermé. De telles fuites ont pour conséquence une diminution de l'énergie stockée dans l'accumulateur, et ainsi un mauvais fonctionnement du deuxième système de gestion du freinage.

Pour remédier à cet inconvénient, on a envisagé l'utilisation, lorsque l'accumulateur haute pression est du type « à piston », d'un moyen de blocage mécanique permettant une conservation, au cours des phases de désactivation de ce système, de l'énergie mécanique potentielle emmagasinée dans cet accumulateur.

Selon des réalisations, un tel système de blocage mécanique comporte, par exemple :
- un pion solidaire du corps de l'accumulateur haute pression de liquide de frein, permettant, au cours des phases de désactivation du second système de gestion du freinage, d'empêcher tout déplacement du piston dans le sens d'un relâchement des ressorts, ou
- une crémaillère, reliée au piston de l'accumulateur haute pression de liquide de frein, en liaison avec un pignon lui-même solidaire d'une roue libre associée à un frein. L'ensemble composé de la roue libre et du frein autorise la rotation du pignon dans le sens correspondant à la compression du ressort et permet de maintenir le piston en position lors des phases de désactivation du deuxième système de freinage.

Par ailleurs, au cours des phases de déblocage des roues dans le cas d'utilisation d'un système anti-blocage, du liquide de frein est échappé d'un ou plusieurs étriers installés sur les roues. Il est alors nécessaire de récupérer ce liquide, soit dans l'accumulateur basse pression de liquide installé en sortie du circuit d'échappement de liquide de frein, soit en utilisant un circuit de freinage reliant directement ce circuit au réservoir de liquide de frein du premier système de gestion de freinage.

Par ailleurs, dans une réalisation, le système comprend un circuit de défreinage comportant un clapet anti-retour installé en parallèle du circuit d'admission de liquide de frein, et relié directement au dispositif de pilotage, de manière à former un circuit indépendant du circuit de freinage.

En outre, l'invention concerne un procédé de gestion de freinage destiné à être mis en oeuvre dans un système de freinage à commande hydraulique installé dans un véhicule automobile, le procédé comprenant les étapes suivantes :
- on détermine une pression hydraulique nécessaire à appliquer sur un élément de frein installé sur une roue d'un véhicule pour assurer la stabilité du véhicule,
- on compare une pression effectivement appliquée sur l'élément de frein à la pression nécessaire et, si cette pression est inférieure à la pression nécessaire déterminée, on commande électroniquement l'activation d'un système de gestion de freinage,
   ce système de freinage comportant un accumulateur haute pression de liquide de frein relié, via un système de canalisations hydrauliques, à l'élément de frein installé sur la roue, et le procédé comprenant en outre, lors de l'activation du système de freinage, les étapes suivantes :
- on détermine une pression hydraulique potentiellement disponible grâce à l'énergie stockée dans l'accumulateur haute pression (19, 20), et
- si cette pression est inférieure à la pression nécessaire, on commande une dérivation du liquide de frein issu de cet accumulateur haute pression (19, 20) vers un amplificateur hydraulique (15) installé en parallèle du système de canalisations hydrauliques.

Dans une réalisation, le procédé comprend en outre l'étape préliminaire de recharger, partiellement ou totalement, l'accumulateur haute pression, ce rechargement étant effectué lors d'une action du conducteur sur un premier système de gestion de freinage installé dans le véhicule.

Dans une réalisation, la pression hydraulique potentiellement disponible grâce à l'énergie stockée dans l'accumulateur haute pression est calculée à partir de la mesure fournie par un capteur de déplacement permettant de connaître la position du piston de l'accumulateur haute pression.

Dans une autre réalisation, un modèle mathématique utilisant la mesure fournie par le capteur de pression maitre-cylindre et les consignes de commandes des électrovannes et de la pompe permet d'estimer la position du piston et par conséquent la pression potentiellement disponible. Cette réalisation différente du contrôle permet donc de s'affranchir du capteur de position du piston de l'accumulateur HP.

L'invention concerne également un véhicule automobile comportant un système de freinage conforme à l'invention.

D'autres avantages et caractéristiques de l'invention apparaîtront avec la description de certains de ses modes de réalisations particuliers, cette description étant effectuée à titre non limitatif à l'aide des figures sur lesquelles :
- la figure 1 montre un dispositif de freinage conforme à l'état de la technique;
- la figure 2 montre un système selon l'invention, dans lequel le deuxième système de gestion de freinage comprend un accumulateur haute pression, un accumulateur basse pression, et un amplificateur hydraulique relié d'une part au circuit de freinage et, d'autre part, au réservoir de liquide de frein,
- les figures 3a, 3b et 3c montrent des variantes de la configuration de la figure 2,
- la figure 4 montre un système selon l'invention, dans lequel l'amplificateur hydraulique n'est pas relié au réservoir de liquide de frein du maître cylindre mais à l'accumulateur basse pression, et
- la figure 5 montre un système selon l'invention, ne comportant pas d'accumulateur basse pression.

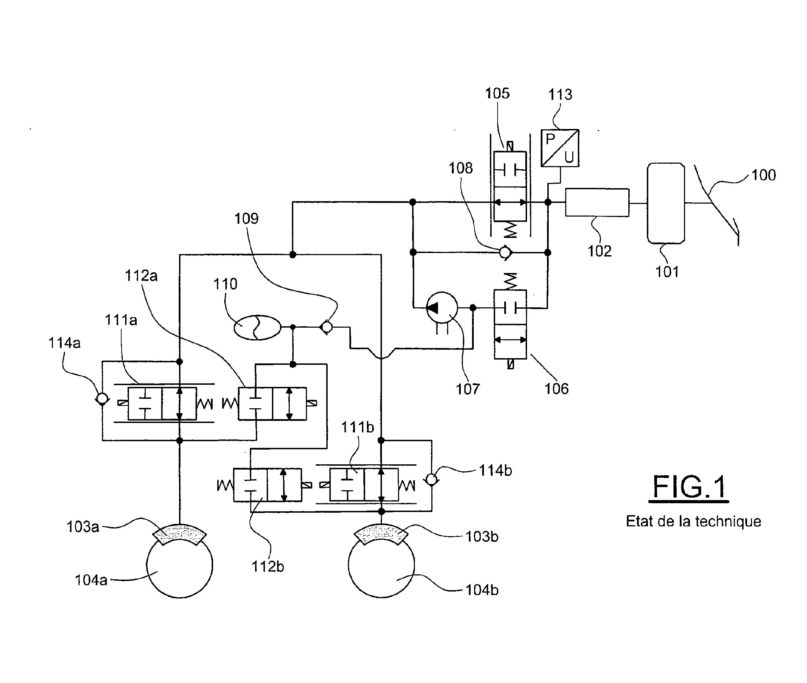

La figure 1 montre la configuration d'un système de freinage conforme à l'état de la technique, du point de vue d'un seul circuit dans le véhicule, c'est -à -dire un circuit de freinage agissant uniquement sur deux roues, mais les éléments sont les mêmes pour les deux autres roues.

Toutefois, dans un tel système, certains éléments peuvent être communs aux deux circuits. Ainsi, par exemple, ce système comporte généralement un seul capteur de pression pour mesurer la pression dans les deux circuits, et un seul moteur pour assurer le fonctionnement des deux pompes hydrauliques.

L'unité de contrôle électronique, indispensable au fonctionnement de ce système n'est pas représentée sur cette figure.

Le système de freinage montré sur la figure 1 comprend les éléments suivants, formant un premier système de gestion du freinage :
- une pédale de frein 100, destinée à transmettre et amplifier l'effort exercé par le conducteur du véhicule lorsqu'il souhaite freiner,
- un amplificateur 101, appelé « booster » ou servofrein selon les configurations, pour amplifier l'effort de freinage du conducteur,
- un maître-cylindre tandem 102, relié à un réservoir de liquide de frein, permettant de transformer l'effort pédale amplifié par le booster en pression hydraulique, et
- des récepteurs 103a et 103b, par exemple des étriers, associés à des disques de frein 104a et 104b, pour transformer la pression hydraulique en couple de freinage au niveau de chacune des roues.

Il comprend en outre un ensemble d'éléments formant un deuxième système de gestion de freinage. Ces éléments, dont le fonctionnement sera décrit par la suite, sont les suivants :
- une électrovanne de pilotage 105, normalement ouverte,
- une électrovanne d'aspiration 106, normalement fermée,
- une pompe hydraulique 107,
- des clapets 108 et 109, permettant de n'autoriser le passage du fluide que dans un sens,
- un accumulateur basse pression 110, destiné à stocker du liquide pendant certaines phases de fonctionnement du système,
- au niveau de chaque étrier de frein, un circuit d'admission et/ou d'échappement, comportant deux électrovannes, l'une étant une électrovanne d'admission normalement ouverte (111a, 111b), et l'autre une électrovanne d'échappement normalement fermée (112a, 112b), ainsi qu'un clapet anti-retour (114a, 114b),
- un capteur de pression 113, et
- un ensemble de canalisations hydrauliques, non référencées, permettant de transporter le liquide entre les différents éléments du système.

Lors d'un freinage classique, dans lequel il n'est pas fait appel au deuxième système de gestion de freinage, toutes les électrovannes sont désactivées, c'est-à-dire qu'elles se trouvent dans leur position normale, et le fonctionnement est alors le suivant :
- lorsque le conducteur appuie sur la pédale 100, ainsi que précédemment décrit, du liquide de frein sous pression est émis en sortie du maître-cylindre tandem 102,
- ce liquide traverse, d'une part, l'électrovanne 105 ouverte, et d'autre part le clapet 108.
- le liquide est alors dirigé, via le réseau de canalisations hydrauliques, en direction des récepteurs 103a et 103b, via les électrovannes 111 a et 111 b,
- le liquide sous pression est ainsi introduit dans les étriers 103a et 103b, ce qui a pour conséquence le freinage de chacune des roues.

Lors d'un défreinage classique, c'est à dire lorsque le conducteur réduit ou cesse d'exercer un effort sur la pédale de frein 100, le liquide sous pression contenu dans les étriers 103a et 103b est redirigé vers le maître-cylindre tandem 102, via les électrovannes 111 a et 111 b et les clapets 114a et 114b.

Lorsqu'un risque de blocage d'une roue est détecté, par exemple de la roue portant l'étrier 103a, il convient de diminuer la pression dans cet étrier, afin de procéder au déblocage de cette roue. Un tel blocage fait suite à une action de freinage trop importante par rapport aux conditions d'adhérence.

Pour effectuer cette diminution de pression, l'unité de contrôle électronique commande les électrovannes d'admission 111 a, normalement ouverte, et d'échappement 112a, normalement fermée, afin qu'elles deviennent respectivement fermée et ouverte.

En conséquence, le liquide sous pression contenu dans l'étrier 103a, s'écoule, via l'électrovannel 12a, jusqu'à l'accumulateur basse pression 110.

Cet accumulateur basse pression permet de stocker de façon temporaire le fluide évacué par les électrovannes d'échappement 112a et 112b des étriers 103a et 103b. Le clapet 109 installé entre l'accumulateur 110 et l'aspiration de la pompe 107, et autorisant l'écoulement du liquide de frein dans le sens accumulateur => pompe permet d'utiliser la pompe 107 pour vider et donc réduire la pression de l'accumulateur 110 en cas de besoin.

Dans le cas, au contraire, où le conducteur n'exerce aucun effort sur la pédale de frein ou exerce un effort insuffisant par rapport à la situation du véhicule, l'unité de contrôle électronique détecte que la pression maître-cylindre, mesurée par le capteur 113, est inférieure à la pression requise pour maintenir une bonne stabilité de ce véhicule. Dans ce cas, elle commande l'activation de l'électrovanne de pilotage 105, qui devient alors fermée, ce qui a pour effet d'isoler le maître-cylindre 102 du circuit de freinage. L'électrovanne d'aspiration 106, placée entre le maître-cylindre 102 et l'aspiration de la pompe hydraulique 107, est également activée et se retrouve alors dans l'état ouvert. La pompe 107 est ainsi reliée au maître-cylindre 102 et peut prélever du fluide directement au niveau du maître-cylindre 102 ou de son réservoir.

L'unité de contrôle commande alors une mise en oeuvre de la pompe hydraulique 107, afin d'envoyer du liquide de frein sous pression en direction des électrovannes d'admission 111a et 111b, qui sont commandées en fonction de la (ou des) roue(s) sur laquelle (lesquelles) il est nécessaire d'appliquer une pression de freinage.

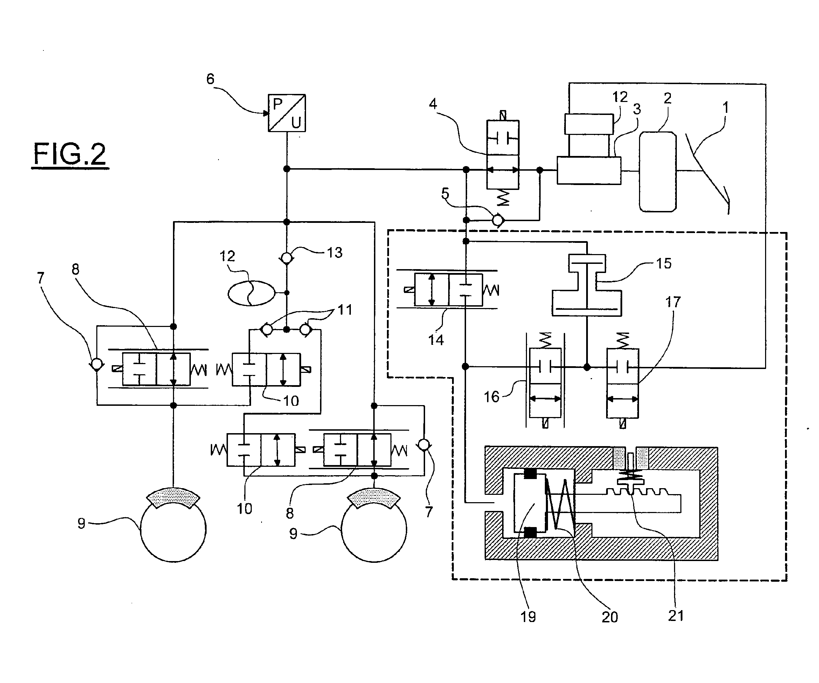

La figure 2 montre une première configuration d'un système de freinage conforme à l'invention. Ce système de freinage comporte une unité de contrôle électronique, non montrée sur cette figure, et mettant en oeuvre une ou plusieurs des fonctionnalités suivantes, parmi lesquelles :
- la centralisation et le traitement de mesures effectuées par différents capteurs de position, vitesse, accélération ou pression installés dans le véhicule,
- la communication avec le système de contrôle moteur,
- le contrôle et la commande, notamment à partir de ces mesures, de différents procédés de pilotage, tel qu'un procédé anti-blocage de roues, ou un procédé de contrôle de trajectoire et de stabilité,
- la commande d'activation d'électrovannes installées dans le système, pour la mise en oeuvre de ces procédés, et
- la commande d'activation ou de désactivation de moyens de blocage mécanique installés dans le système de freinage.

Ce système comporte l'ensemble des éléments précédemment décrits, à savoir :
- deux circuits d'admission et d'échappement, reliés chacun à un élément de frein 9 installé sur une roue du véhicule, chaque circuit étant formé d'une électrovanne d'admission 8, normalement ouverte, une électrovanne d'échappement 10, normalement fermée, et des clapets anti-retour 7 et 11,
- un premier système de gestion de freinage comportant un booster 2 et un maître cylindre tandem 3, commandé par un conducteur via une pédale 1,
- un deuxième système de gestion du freinage comportant un accumulateur haute pression, un amplificateur hydraulique 15, et un moyen de dérivation de liquide comportant une électrovanne 14 et une électrovanne 16, normalement fermées, et
- un dispositif de pilotage comportant une électrovanne 4 normalement ouverte et les électrovannes 14 et 16, et permettant d'activer le deuxième système de gestion de freinage.

Dans ce système, les phases de freinage et de défreinage sont mises en oeuvre de manière similaire aux systèmes existants dans l'état de la technique, à savoir :
Lorsque le conducteur appuie sur la pédale 1, le booster 2, ou servofrein, amplifie cet effort qui est transmis au maître-cylindre 3. La pression générée par le maître-cylindre 3 est transmise par le clapet 5 et l'électrovanne normalement ouverte 4, puis par les électrovannes normalement ouvertes 8, aux étriers 9 installés respectivement sur les roues du véhicule.
A l'inverse, lorsque le conducteur relâche la pédale 1, le fluide contenu sous pression dans les étriers 9 retourne au maître-cylindre 3 à travers les clapets 7, les électrovannes normalement ouvertes 8 et l'électrovanne normalement ouverte 4.

On précise ici que, dans l'ensemble de la description, les électrovannes mises en oeuvre pourront être des électrovannes tout-ou-rien, des électrovannes proportionnelles, des électrovannes « débit » ou des électrovannes « pression ».

Une électrovanne tout-ou-rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

Une d'électrovanne « débit » permet de contrôler un débit, et une électrovanne « pression », permet de contrôler la différence de pressions appliquée à cette électrovanne.

Le système montré sur la figure 2 permet, en outre, la mise en oeuvre de fonctionnalités anti-blocage, permettant de relâcher la pression sur un ou plusieurs étriers de frein lorsqu'un risque de blocage de roue est détecté par l'unité de contrôle électronique.

Ainsi, lorsqu'il est nécessaire de faire chuter la pression dans un étrier 9, l'électrovanne normalement ouverte d'admission 8 et l'électrovanne d'échappement normalement fermée 10 sont activées (l'activation peut ne pas être simultanée ni totale). Le fluide s'écoule via le clapet 11 jusqu'à l'accumulateur basse pression 12. La pression de cet accumulateur 12 peut être inférieure à la pression maître cylindre car le clapet 13 n'autorise l'écoulement que dans le sens de l'accumulateur vers le reste du circuit. Les caractéristiques de l'accumulateur basse pression, par exemple son volume et/ou la raideur du ressort utilisé, sont choisies de façon à pouvoir stocker tout le volume de fluide évacué des étriers 9 par les électrovannes d'échappement 10 durant la régulation, tout en ayant une élévation de pression relativement faible. L'accumulateur basse pression 12 est vidé par l'intermédiaire du clapet 13 lorsque, au cours du défreinage la pression maître cylindre 3 devient inférieure à la pression de l'accumulateur basse pression 12.

Le système de la figure 2 comprend, en outre un deuxième système de gestion du freinage, délimité sur la figure par une ligne fermée en trait interrompu. Il, permet de générer ou d'augmenter la pression de freinage appliquée sur un ou plusieurs étriers de freins, en l'absence d'action d'un conducteur sur la pédale 1. Ce deuxième système de gestion du freinage permet ainsi de mettre en oeuvre une fonctionnalité de contrôle de stabilité, de type ESC, telle que décrite précédemment. En effet, lors d'un freinage classique, la pression permettant de freiner les roues est issue d'une force mécanique exercée par le conducteur. En l'absence de cette force, il est nécessaire de disposer d'une autre source d'énergie pour générer une pression dans les étriers 9.

A cet effet, le deuxième système de gestion du freinage comprend un accumulateur haute pression comportant un piston 19, pouvant comprimer un ou des ressorts 20, pour augmenter l'énergie potentielle contenue dans ce(s) ressort(s). Cet accumulateur est couplé à un amplificateur hydraulique 15, positionné en parallèle d'un système de canalisations permettant la circulation du liquide de frein de l'accumulateur vers les étriers 9. L'ensemble accumulateur-amplificateur forme ainsi un dispositif de stockage et de fourniture d'énergie indépendamment de toute action mécanique sur la pédale 1.

Un capteur de déplacement, non représenté, installé sur le piston 19 permet d'estimer la quantité d'énergie stockée sous forme potentielle dans le ou les ressorts 20. Dans certaines configurations, l'unité de contrôle électronique peut commander l'allumage d'un voyant ou l'affichage d'un message d'information à l'attention du conducteur si le niveau d'énergie est jugé insuffisant pour permettre un fonctionnement correct du dispositif de contrôle de stabilité et de trajectoire.

En outre, dans une réalisation, l'unité de contrôle électronique met en oeuvre une fonctionnalité empêchant le démarrage du moteur tant que le système n'est pas rechargé.

Le rechargement du dispositif de stockage et de fourniture d'énergie est effectué de la façon suivante :
Dans un premier temps, les électrovannes 14 et 17 sont activées. Lorsque le conducteur appuie sur la pédale de frein 1, le piston de l'amplificateur hydraulique 15 est repoussé. Le liquide qui était contenu dans la chambre interne de l'amplificateur, située du côté de la tête de piston de plus grande surface, retourne au réservoir 12 par l'intermédiaire de l'électrovanne 17. Selon les réalisations, un ressort interne à l'amplificateur hydraulique peut également être utilisé pour repousser le piston de l'amplificateur.
Lorsque l'amplificateur est en butée au niveau de la tête de piston de plus grande surface, c'est à dire lorsqu'il est remis en position initiale, la pression dans le circuit augmente. Le piston 19 commence à se déplacer dans le sens d'une compression du ressort 20.
Enfin, lorsque l'unité de contrôle électronique détermine que le ou les ressorts 20 sont suffisamment comprimés, elle commande une désactivation des électrovannes 14 et 17.

Un tel procédé de rechargement est, selon les configurations du système, mis en oeuvre au cours de différentes phases de fonctionnement du véhicule :
- dans une configuration préférentielle, le rechargement est effectué avant tout démarrage du véhicule, par un ou plusieurs appuis successifs du conducteur sur la pédale. Dans ce cas, les différents éléments du dispositif de stockage et de fourniture d'énergie sont dimensionnés de façon à limiter le nombre d'appuis que doit pratiquer le conducteur,
- en outre, dans une autre configuration, on peut envisager un rechargement du dispositif au cours d'une phase de freinage classique, c'est à dire une phase pendant laquelle la fonctionnalité de contrôle de stabilité n'est pas mise en oeuvre. Dans ce cas, les électrovannes 14 et 17 sont activées, totalement ou partiellement, alors même que l'électrovanne de pilotage 4 est au repos, c'est à dire ouverte. Lorsque le conducteur exerce une pression sur la pédale 1 pour freiner, une partie de cette pression est transmise aux étriers 9 via l'électrovanne 4, et une autre partie est transmise au dispositif de stockage d'énergie, via l'électrovanne 14.

De manière avantageuse, dans une telle configuration, les électrovannes 14 et 17 sont des électrovannes proportionnelles, de manière à permettre la répartition du liquide utilisé pour le freinage d'une part et pour le rechargement d'autre part.

Le deuxième système de gestion du freinage est mis en oeuvre lorsque la pression maître cylindre mesurée par le capteur de pression 6 est inférieure à une pression requise. La pression requise est une pression déterminée par l'unité de contrôle, en fonction de paramètres relatifs à l'état de fonctionnement du véhicule, notamment à son accélération latérale, sa vitesse de lacet, la vitesse de ses roues, et l'angle de rotation donné par le conducteur par l'intermédiaire d'un volant. Ainsi, si la pression maître cylindre est inférieure à cette pression, cela signifie que le premier système de gestion de freinage n'est pas en capacité, à lui seul, d'assurer un freinage permettant de maintenir la stabilité du véhicule.

Dans ce cas, le deuxième système de gestion de freinage est mis en oeuvre, selon un mode de fonctionnement choisi en fonction de la quantité d'énergie stockée dans l'accumulateur haute pression.

Un premier mode de fonctionnement, dit « sans amplification », est choisi lorsque l'énergie stockée dans le ou les ressorts 20 est suffisante au regard de la pression requise dans les étriers 9. Dans ce cas, l'électrovanne 16 est laissée au repos, c'est à dire fermée, et elle empêche donc toute circulation de fluide, en provenance de l'accumulateur, en direction de l'amplificateur hydraulique 15.

L'électrovanne 14, quant à elle, est préférentiellement une électrovanne proportionnelle, et elle est partiellement ouverte, de manière à contrôler la pression envoyée en direction des étriers 9, en fonction de la pression requise.

Les électrovannes d'admission 8 sont également commandées en fonction, d'une part, de la pression requise, et d'autre part, également des roues sur lesquelles il est nécessaire d'appliquer cette pression. Le ou les ressorts 20 exercent alors un effort sur le piston 19, effort qui génère une pression hydraulique dans la chambre de l'accumulateur haute pression, cette pression étant transmise aux étriers 9 dans une mesure dépendant de l'activation des différentes électrovannes.

En revanche, lorsque l'énergie stockée dans le ou les ressorts 20 est insuffisante par rapport à la pression requise, on utilise un mode dit « avec amplification », dans lequel on fait appel à l'amplificateur hydraulique 15.

Dans ce cas, l'électrovanne 16 est partiellement ou totalement activée, de manière à permettre la circulation de liquide de l'accumulateur haute pression en direction de l'amplificateur hydraulique 15. Cette pression, modulée par l'électrovanne 16, exerce un effort de poussée sur le piston de l'amplificateur 15, du côté de la plus grande section. Le rapport des surfaces des têtes du piston de l'amplificateur 15 est tel qu'une pression supérieure à celle modulée par l'électrovanne 16 est obtenue du côté de la tête de plus petite surface. Cette pression est ensuite transmise aux étriers 9 par l'intermédiaire des électrovannes d'admission 8.

Dans ces deux modes de fonctionnement, si le conducteur appuie finalement sur la pédale de frein 1, la pression résultante de cette action peut être transmise aux étriers 9 si elle est supérieure à la pression modulée par l'électrovanne 14 ou 16 par l'intermédiaire du clapet 5.

En mode de freinage ou défreinage classique, le deuxième système de gestion de freinage n'est pas utilisé, et les électrovannes 14, 16 et 17 sont désactivées, c'est à dire fermées. Toutefois, même lorsque les vannes sont fermées, il est possible que l'étanchéité ne soit pas totale, ce qui peut conduire à des fuites, à travers le circuit de freinage, du liquide de frein contenu dans la chambre de l'accumulateur haute pression. Or, de telles fuites ont pour conséquence un déplacement du piston 19, sous l'effet du relâchement des ressorts 20. L'énergie potentielle stockée dans l'accumulateur haute pression diminue alors, ce qui conduit à une diminution des performances, voire à un dysfonctionnement du dispositif de fourniture et de stockage d'énergie.

Pour remédier à cet inconvénient, on a envisagé, dans une configuration, de mettre en oeuvre un dispositif de blocage mécanique 21, permettant de maintenir en position le piston 19, et en compression le ou les ressorts 20, même en cas de fuite du liquide de frein.

Un tel dispositif de blocage comporte, par exemple, un pion, qui coopère avec des créneaux positionnés sur l'axe du piston de manière à n'autoriser, lorsque le dispositif de blocage est désactivé, qu'un déplacement dans le sens d'une compression des ressorts 20.

Un tel dispositif de blocage est commandé par l'unité de contrôle électronique, pour pouvoir être activé lorsqu'il s'avère nécessaire d'utiliser le dispositif de stockage et de fourniture d'énergie.

Ainsi, dans une réalisation comprenant un système de blocage 21 et dans les deux modes de fonctionnement qui viennent d'être décrits, tant que le système de blocage 21 n'est pas activé, le piston 19 est maintenu en position (immobile) et aucune pression n'est générée. Lorsque le contrôle active le système de blocage 21, le piston 19 est libéré et l'effort qu'exercent le ou les ressorts 20 sur le piston 19 est transformé en pression hydraulique, qui est ensuite soit directement transmise aux électrovannes d'admission 8 et donc aux étriers 9, soit déviée via l'électrovanne 16 vers l'amplificateur hydraulique 15.

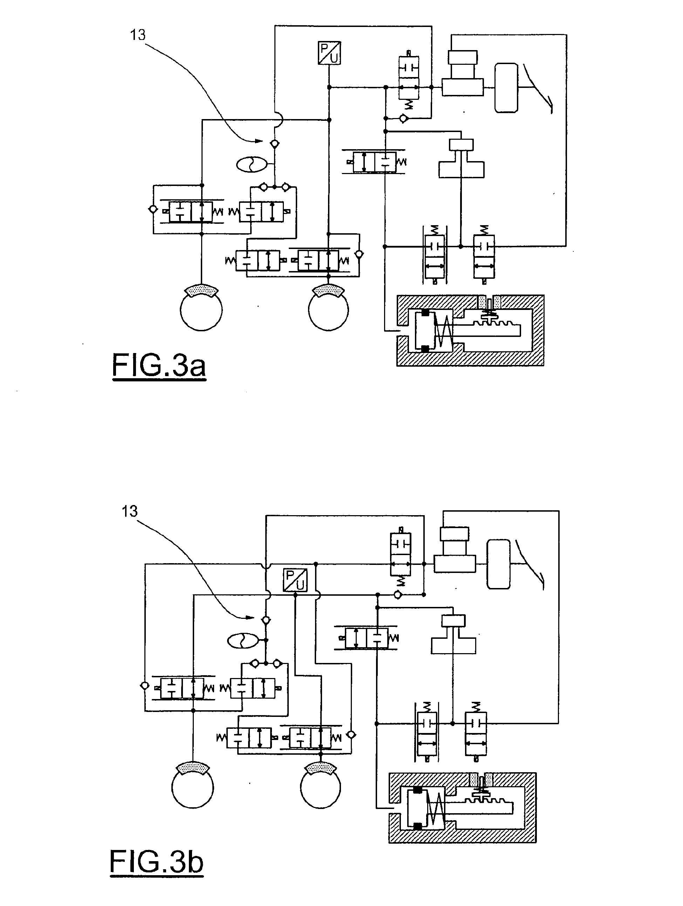

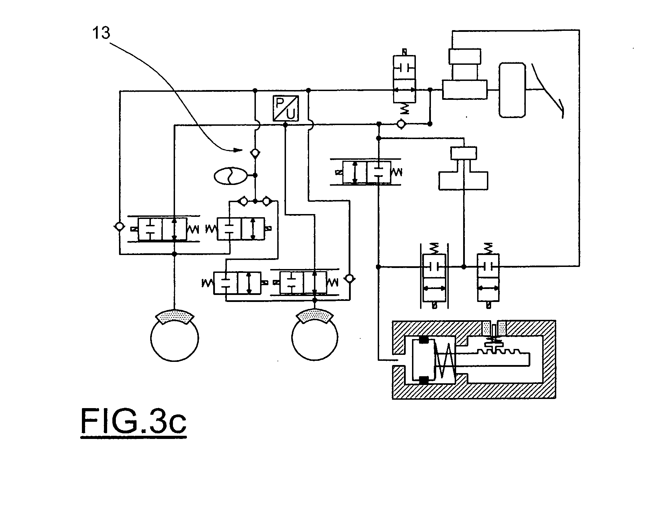

Les figures 3a, 3b et 3c montrent trois variantes de cette configuration, dans lesquelles le circuit de freinage est légèrement modifié, sans incidence aucune sur le mode de fonctionnement de l'ensemble du système :
- Sur la figure 3a, le clapet 13 est relié directement au maître cylindre 3 ; ainsi, le liquide de frein issu de l'accumulateur basse pression 12 est dirigé vers le maître cylindre quel que soit l'état (ouvert ou fermé) de l'électrovanne 4.
- Sur la figure 3b, le clapet 13 est dans la même configuration que sur la figure précédente. En outre, les clapets 7 sont reliés directement à l'électrovanne 4, sans liaison avec le clapet 5.
- Sur la figure 3c, les clapets 7 ainsi que le clapet 13 sont directement reliés à l'électrovanne 4, sans liaison avec le clapet 5.

Les deux dernières configurations permettent de fournir un circuit de défreinage qui soit indépendant du reste du circuit de freinage.

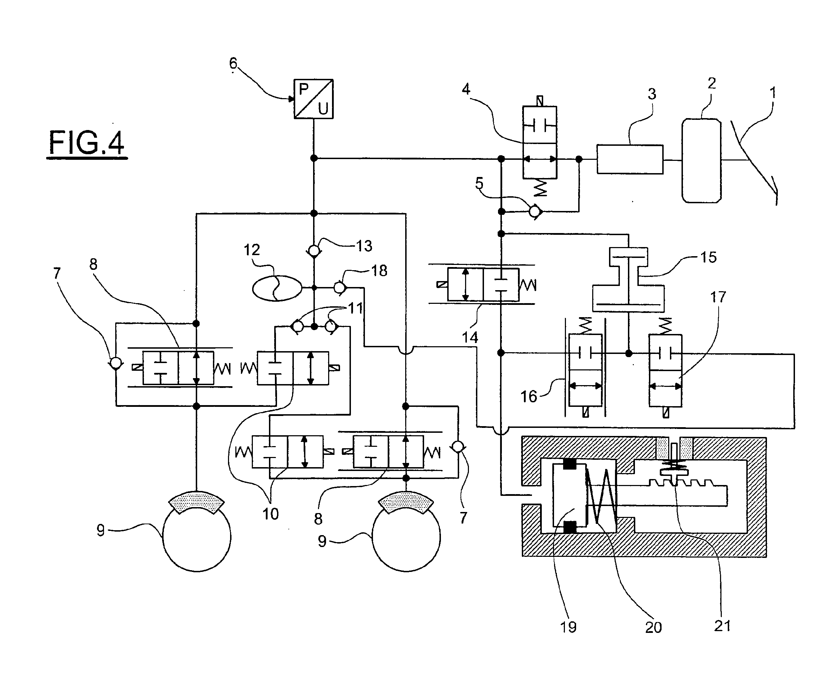

La figure 4 montre une configuration de l'invention dans laquelle le liquide de frein issu de l'amplificateur hydraulique 15 lors d'une remise en position initiale de ce dernier n'est pas dirigé vers le réservoir du maître cylindre 3, comme dans la configuration précédente, mais vers l'accumulateur basse pression 12.

A cet effet, le système montré sur cette figure comporte une canalisation hydraulique reliant la sortie de l'électrovanne 17 à l'accumulateur basse pression 12. Cette canalisation comporte, dans une réalisation non obligatoire, un clapet anti-retour 18, permettant la circulation du liquide de frein uniquement dans le sens électrovanne ⇒ accumulateur basse pression.

Le fonctionnement d'un système selon cette configuration est, à cette exception près, le même que celui d'un système selon la configuration de la figure 2.

Les variantes décrites aux figures 3a, 3b et 3c peuvent également être mises en oeuvre dans le système de la figure 4.

En outre, comme pour le système montré en figure 2, il est envisageable de ne pas utiliser de dispositif de blocage mécanique, par exemple afin de réduire les coûts ou de faciliter l'installation du système de freinage dans le véhicule.

Dans une autre variante, applicable à tous les modes de réalisation décrits dans la présente description, les clapets 11 sont intégrés aux électrovannes 10, ou totalement supprimés.

La configuration de la figure 4 présente des avantages intéressants en termes d'intégration du système de freinage dans le véhicule. En effet, la canalisation qui relie, dans la configuration de la figure 2, l'électrovanne 17 au réservoir 12 est relativement encombrante et complexe à intégrer, du fait de l'éloignement des différents éléments, notamment l'éloignement existant entre le maître cylindre et l'amplificateur hydraulique 15.

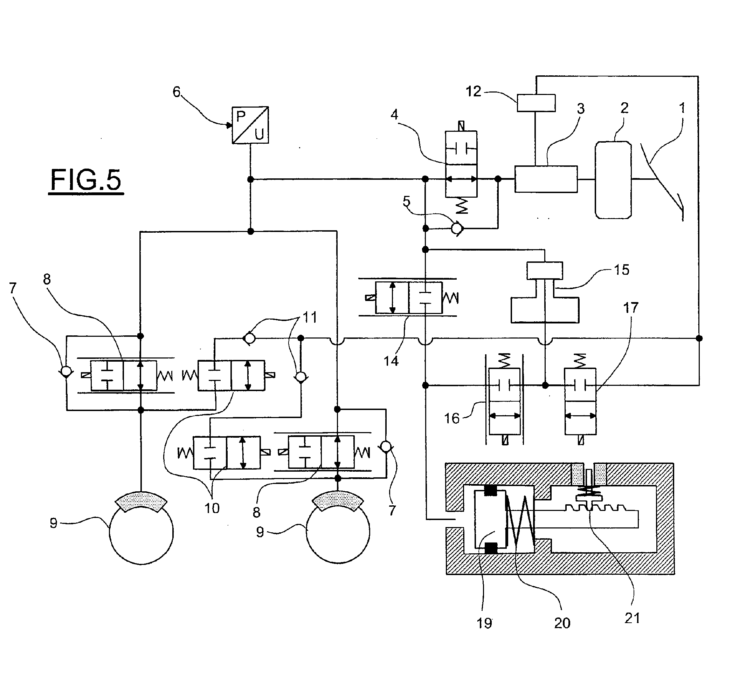

La figure 5 montre une configuration d'un système selon l'invention, dans laquelle on a supprimé l'accumulateur basse pression 12.

Un système selon l'invention se distingue notamment de l'état de la technique par le fait qu'il ne met pas en oeuvre de pompe hydraulique pour fournir l'énergie nécessaire aux montées en pression dans le circuit de freinage en l'absence d'une action du conducteur.

La suppression d'une telle pompe conduit à la nécessité d'utiliser un accumulateur basse pression de plus grande capacité, et donc de plus grande taille, que les accumulateurs utilisés dans les systèmes existants. En outre, cette suppression nécessite des modifications dans les procédés de commande mis en oeuvre par l'unité de contrôle électronique, afin de permettre la maîtrise, notamment par action sur les électrovannes d'échappement situées au niveau des étriers, du volume de liquide de frein transféré des étriers vers cet accumulateur.

Par conséquent, en vue d'une réduction d'encombrement du système de freinage, on a envisagé une configuration d'un système selon l'invention, dans laquelle l'accumulateur basse pression est supprimé. Cet accumulateur est remplacé par une canalisation hydraulique reliant directement les clapets 11 au réservoir du maître cylindre 3.

Le fonctionnement d'un système selon cette configuration est similaire à celui précédemment décrit en ce qui concerne les phases de freinage et de défreinage.

En revanche, lorsque l'unité de contrôle électronique détecte un risque de blocage d'une roue, elle commande une diminution de la pression appliquée sur les étriers des roues bloquées. Le liquide de frein excédentaire est alors dirigé, via les électrovannes d'échappement et les clapets 11, vers le réservoir du maître cylindre, sans être stockée dans un accumulateur basse pression intermédiaire.

Dans les systèmes de l'état de la technique, la quantité de liquide de frein évacuée était limitée par la capacité de stockage de l'accumulateur, ce qui imposait la mise en oeuvre d'un procédé de gestion et de contrôle complexe par l'unité de contrôle électronique. Un tel procédé n'est pas nécessaire dans un système selon l'invention tel que montré en figure 5, puisque le volume de liquide évacué n'est plus limité ; en effet, la capacité de stockage d'un réservoir de maître cylindre est largement suffisante pour contenir le liquide de frein évacué des étriers, quelle que soit la quantité.

Dans une variante de cette configuration, les clapets 7 sont reliés à l'électrovanne 4 sans liaison avec le clapet 5, ce qui permet de former un circuit de défreinage indépendant du reste du circuit.

Il a précédemment été mentionné, lors de la description d'une phase de rechargement de l'accumulateur haute pression, qu'on utilisait un capteur de déplacement installé sur le piston 19, afin d'estimer la quantité d'énergie stockée sous forme potentielle dans le ressort 20.

Toutefois, dans une réalisation, applicable à l'ensemble des configurations précédemment décrites, ce capteur de déplacement est supprimé. Dans ce cas, la quantité d'énergie stockée dans l'accumulateur est déterminée à chaque instant, non pas en fonction du déplacement du piston, mais à partir d'un modèle mathématique, mis en oeuvre par l'unité de contrôle électronique, à partir de l'information mesurée par le capteur de pression 6 installé dans le circuit.

## Revendications

1. Système de freinage à commande hydraulique, destiné à être installé dans un véhicule automobile, comprenant
- au moins un circuit d'admission et d'échappement de liquide de frein relié à un élément de frein (9) installé sur une roue du véhicule,
- un premier système de gestion du freinage, commandé par un conducteur du véhicule via un dispositif de commande installé dans l'habitacle du véhicule, et relié à un réservoir (12) de liquide de frein,
- un deuxième système de gestion du freinage, commandé par une unité de contrôle électronique installée dans le véhicule,
- ledit deuxième système de gestion du freinage comportant un accumulateur haute pression (19, 20) de liquide de frein, relié au circuit d'échappement et d'admission du liquide de frein, via un circuit de freinage comprenant des canalisations hydrauliques,
**caractérisé en ce que** le deuxième système de gestion du freinage comporte
- un amplificateur hydraulique (15), positionné en parallèle du système de canalisations hydrauliques, et
- un moyen de dérivation du liquide (16), pour dériver du liquide de frein issu de l'accumulateur vers l'amplificateur (15) lorsque la pression disponible dans l'accumulateur est insuffisante par rapport à une pression nécessaire dans l'élément de frein pour assurer la stabilité du véhicule.

2. Système selon la revendication 1, **caractérisé en ce qu'**il comprend un dispositif de pilotage, commandé par l'unité de contrôle électronique, permettant l'activation de l'un et/ou l'autre des systèmes de gestion de freinage, en fonction de paramètres reflétant un état du véhicule et une action du conducteur, ce dispositif de pilotage comportant une ou plusieurs électrovannes (4, 14, 16, 17) installée(s) dans le circuit de freinage.

3. Système selon la revendication 1 ou 2, **caractérisé en ce que** l'amplificateur hydraulique (15) comporte un piston à deux têtes de surfaces différentes, de façon qu'un déplacement du piston sous l'effet d'une pression appliquée en entrée sur la tête de plus grande surface induise une pression supérieure en sortie du côté de la tête de plus petite surface.

4. Système selon l'une des revendications 1 à 3, **caractérisé en ce que** le circuit de freinage comporte une liaison entre le premier et le deuxième système de gestion de freinage, permettant un rechargement, total ou partiel, de l'accumulateur haute pression (19, 20) du deuxième système lors d'une commande du conducteur sur le premier système, et une remise en position de l'amplificateur hydraulique.

5. Système selon la revendication 4, **caractérisé en ce que** le circuit de freinage comporte une liaison entre l'amplificateur hydraulique (15) et le réservoir (12) de liquide de frein, permettant un passage de liquide de l'amplificateur (15) vers le réservoir (12) lors d'une remise en position initiale de l'amplificateur.

6. Système selon la revendication 4, **caractérisé en ce que** le circuit de freinage comporte une liaison entre l'amplificateur hydraulique (15) et un accumulateur basse pression (12) de liquide de frein, permettant un stockage de liquide de frein dans l'accumulateur basse pression (12), lors d'une remise en position initiale de l'amplificateur (15).

7. Système selon l'une des revendications précédentes, **caractérisé en ce que** l'accumulateur haute pression de liquide de frein comporte un piston (19) installé dans un cylindre, et un ressort (20) comprimé lors d'une accumulation de liquide de frein, permettant ainsi un stockage d'énergie potentielle.

8. Système selon la revendication 7, **caractérisé en ce que** le deuxième système de gestion du freinage comporte en outre un moyen de blocage mécanique (21) permettant une conservation, au cours des phases de désactivation de ce système, de l'énergie mécanique potentielle emmagasinée dans l'accumulateur haute pression.

9. Système selon la revendication 8, **caractérisé en ce que** le moyen de blocage mécanique comporte un pion solidaire du corps de l'accumulateur de liquide de frein, et permettant, au cours des phases de désactivation du deuxième système de gestion du freinage, le blocage du déplacement du piston dans le sens d'une décompression du ressort.

10. Système selon la revendication 8, **caractérisé en ce que** le moyen de blocage mécanique comporte :
- une crémaillère, reliée au piston de l'accumulateur haute pression de liquide de frein,
- un pignon, en liaison avec la crémaillère, et solidaire d'une roue libre associée à un frein.

11. Système selon la revendication 2, **caractérisé en ce qu'**il comprend un circuit de défreinage comportant un clapet anti-retour (7) installé en parallèle du circuit d'admission de liquide de frein, et relié directement au dispositif de pilotage, de manière à former un circuit indépendant du circuit de freinage.

12. Procédé de gestion de freinage destiné à être mis en oeuvre dans un système de freinage à commande hydraulique installé dans un véhicule automobile, le procédé comprenant les étapes suivantes :
- on détermine une pression hydraulique nécessaire à appliquer sur un élément de frein (9) installé sur une roue d'un véhicule pour assurer la stabilité et le contrôle de trajectoire du véhicule,
- on compare une pression effectivement appliquée sur l'élément de frein à la pression nécessaire et, si cette pression est inférieure à la pression nécessaire, on commande électroniquement l'activation d'un système de gestion de freinage,
ce système de freinage comportant un accumulateur haute pression (19, 20) de liquide de frein relié, via un circuit de freinage, à l'élément de frein installé sur la roue (9), et le procédé comprenant en outre, lors de l'activation du système de freinage, les étapes suivantes :
- on détermine une pression hydraulique potentiellement disponible grâce à l'énergie stockée dans l'accumulateur haute pression (19, 20), et
- si cette pression est inférieure à la pression nécessaire, on commande une dérivation du liquide de frein issu de cet accumulateur haute pression (19, 20) vers un amplificateur hydraulique (15) installé en parallèle du système de canalisations hydrauliques.

13. Procédé de gestion de freinage selon la revendication 12, comprenant l'étape préliminaire de recharger, partiellement ou totalement, l'accumulateur haute pression, ce rechargement étant effectué lors d'une action du conducteur sur un premier système de gestion de freinage installé dans le véhicule.

14. Procédé de gestion de freinage selon la revendication 13, la pression hydraulique potentiellement disponible grâce à l'énergie stockée dans l'accumulateur haute pression est calculée à partir de la mesure fournie par un capteur de déplacement permettant de connaître la position du piston (19) de l'accumulateur haute pression.

15. Véhicule comportant un système de freinage selon l'une des revendications 1 à 11.

## Claims

1. A braking system with hydraulic control, intended to be installed in a motor vehicle, comprising
- at least one circuit for the admission and exhaust of brake fluid connected to a brake element (9) installed on a wheel of the vehicle,
- a first braking management system, controlled by a driver of the vehicle via a control device installed in the passenger compartment of the vehicle, and connected to a tank (12) of brake fluid,
- a second braking management system, controlled by an electronic control unit installed in the vehicle,
- the said braking management system comprising a high pressure accumulator (19, 20) of brake fluid, connected to the exhaust and admission circuit of the brake fluid, via a braking circuit comprising hydraulic ducts,
**characterized in that** the second braking management system comprises
- a hydraulic amplifier (15), positioned in parallel to the system of hydraulic ducts, and
- a fluid diverting means (16), to divert brake fluid originating from the accumulator towards the amplifier (15) when the pressure available in the accumulator is insufficient with respect to a necessary pressure in the brake element to ensure the stability of the vehicle.

2. The system according to Claim 1, **characterized in that** it comprises a control device, controlled by the electronic control unit, permitting the activation of one and/or other of the braking management systems, as a function of parameters reflecting a status of the vehicle and an action of the driver, this control device comprising one or several electro-valves (4, 14, 16, 17) installed in the braking circuit.

3. The system according to Claim 1 or 2, **characterized in that** the hydraulic amplifier (15) comprises a piston with two heads having different surfaces, such that a displacement of the piston under the effect of a pressure applied on entry on the head having the larger surface induces a greater pressure on exit of the side of the head having the smaller surface.

4. The system according to one of Claims 1 to 3, **characterized in that** the braking circuit comprises a connection between the first and the second braking management systems, permitting a total or partial recharging of the high pressure accumulator (19, 20) of the second system on a command from the driver on the first system, and a resetting in position of the hydraulic amplifier.

5. The system according to Claim 4, **characterized in that** the braking circuit comprises a connection between the hydraulic amplifier (15) and the tank (12) of brake fluid, permitting a passage of fluid from the amplifier (15) towards the tank (12) on a resetting in initial position of the amplifier.

6. The system according to Claim 4, **characterized in that** the braking circuit comprises a connection between the hydraulic amplifier (15) and a low pressure accumulator (12) of brake fluid, permitting a storage of brake fluid in the low pressure accumulator (12), on a resetting in initial position of the amplifier (15).

7. The system according to one of the preceding claims, **characterized in that** the high pressure accumulator of brake fluid comprises a piston (19) installed in a cylinder, and a spring (20), compressed on an accumulation of brake fluid, thus permitting a storage of potential energy.

8. The system according to Claim 7, **characterized in that** the second braking management system further comprises a mechanical blocking means (21) permitting a conservation, during the deactivation phases of this system, of the potential mechanical energy stored in the high pressure accumulator.

9. The system according to Claim 8, **characterized in that** the mechanical blocking means comprises a pin integral with the body of the accumulator of brake fluid and permitting, during the deactivation phases of the second braking management system, the blocking of the displacement of the piston in the direction of a decompression of the spring.

10. The system according to Claim 8, **characterized in that** the mechanical blocking means comprises:
- a rack, connected to the piston of the high pressure accumulator of brake fluid,
- a pinion, in connection with the rack, and integral with a free wheel associated with a brake.

11. The system according to Claim 2, **characterized in that** it comprises an unbraking circuit comprising a non-return valve (7) installed in parallel with the circuit for admission of brake fluid, and connected directly to the control device, so as to form a circuit which is independent of the braking circuit.

12. A braking management method intended to be implemented in a braking system with hydraulic control installed in a motor vehicle, the method comprising the following stages:
- a hydraulic pressure is determined which is necessary to apply on a brake element (9) installed on a wheel of a vehicle to ensure the stability and the control of the course of the vehicle,
- a pressure effectively applied on the brake element is compared with the necessary pressure and, if this pressure is lower than the necessary pressure, the activation of a braking management system is controlled electronically,
this braking system comprising a high pressure accumulator (19, 20) of brake fluid connected, via a braking circuit, to the brake element installed on the wheel (9), and the method further comprising, on activation of the braking system, the following stages:
- a hydraulic pressure is determined which is potentially available due to the energy stored in the high pressure accumulator (19, 20), and
- if this pressure is lower than the necessary pressure, a diversion is controlled of the brake fluid originating from this high pressure accumulator (19, 20) towards a hydraulic amplifier (15) installed in parallel with the system of hydraulic ducts.

13. The braking management method according to Claim 12, comprising the preliminary stage of recharging, partially or totally, the high pressure accumulator, this recharging being effected on an action by the driver on a first braking management system installed in the vehicle.

14. The braking management method according to Claim 13, the hydraulic pressure which is potentially available owing to the energy stored in the high pressure accumulator is calculated from the measurement provided by a movement sensor allowing the position of the piston (19) of the high pressure accumulator to be known.

15. A vehicle comprising a braking system according to one of Claims 1 to 11.

## Patentansprüche

1. Bremssystem mit hydraulischer Steuerung, das dazu bestimmt ist, in einem Kraftfahrzeug installiert zu werden, Folgendes aufweisend:
- mindestens einen Einlass- und Auslasskreislauf für Bremsflüssigkeit, der mit einem Bremselement (9) verbunden ist, das auf einem Rad des Fahrzeugs installiert ist,
- ein erstes Verwaltungssystem des Bremsens, das von einem Fahrer des Fahrzeugs über eine Steuervorrichtung gesteuert wird, die in dem Fahrgastraum des Fahrzeugs installiert und mit einem Bremsflüssigkeitsbehälter (12) verbunden ist,
- ein zweites Verwaltungssystem des Bremsens, das von einer elektronischen Steuereinheit, die in dem Fahrzeug installiert ist, gesteuert wird,
- wobei das zweite Verwaltungssystem des Bremsens einen Hochdruckspeicher (19, 20) für Bremsflüssigkeit aufweist, der mit dem Auslass- und Einlasskreislauf der Bremsflüssigkeit über einen Bremskreislauf, der hydraulische Kanalisationen enthält, verbunden ist,
**dadurch gekennzeichnet, dass** das zweite Verwaltungssystem des Bremsens Folgendes aufweist
- einen hydraulischen Verstärker (15), der parallel zu dem System hydraulischer Kanalisationen positioniert ist, und
- ein Umlenkmittel der Flüssigkeit (16), um Bremsflüssigkeit, die aus dem Speicher stammt, zu dem Verstärker (15) umzuleiten, wenn der in dem Speicher verfügbare Druck im Vergleich zu einem Druck, der in dem Bremseelement erforderlich ist, um die Stabilität des Fahrzeugs sicherzustellen, nicht ausreicht.

2. System nach Anspruch 1, **dadurch gekennzeichnet, dass** es eine Steuervorrichtung aufweist, die von der elektronischen Steuereinheit gesteuert wird, die das Aktivieren des einen und/oder des anderen Verwaltungssystems des Bremsens in Abhängigkeit von Parametern erlaubt, die einem Zustand des Fahrzeugs und einer Aktion des Fahrers entsprechen, wobei diese Steuervorrichtung eines oder mehrere Magnetventile (4, 14, 16, 17) aufweist, die in dem Bremskreislauf installiert sind.

3. System nach Anspruch 1 oder 2, **dadurch gekennzeichnet, dass** der hydraulische Verstärker (15) einen Kolben mit zwei Köpfen mit unterschiedlichen Oberflächen aufweist, so dass eine Bewegung des Kolbens unter der Einwirkung eines am Eingang auf den Kopf mit größerer Oberfläche ausgeübten Drucks einen höheren Druck am Ausgang auf der Seite des Kopfes mit der kleineren Oberfläche bewirkt.

4. System nach einem der Ansprüche 1 bis 3, **dadurch gekennzeichnet, dass** der Bremskreislauf eine Verbindung zwischen dem ersten und dem zweiten Verwaltungssystem des Bremsens aufweist, die ein komplettes oder teilweises Nachladen des Hochdruckspeichers (19, 20) des zweiten Systems bei einer Steuerung des Fahrers auf dem ersten System und ein Neupositionieren des hydraulischen Verstärkers erlaubt.

5. System nach Anspruch 4, **dadurch gekennzeichnet, dass** der Bremskreislauf eine Verbindung zwischen dem hydraulischen Verstärker (15) und dem Bremsflüssigkeitsbehälter (12) aufweist, die ein Durchgehen von Flüssigkeit von dem Verstärker (15) zu dem Behälter (12) bei einem Zurückstellen in Ausgangsstellung des Verstärkers erlaubt.

6. System nach Anspruch 4, **dadurch gekennzeichnet, dass** der Bremskreislauf eine Verbindung zwischen dem hydraulischen Verstärker (15) und einem Niederdruckspeicher (12) für Bremsflüssigkeit aufweist, die bei einem Zurückstellen in die Ausgangsstellung des Verstärkers (15) ein Speichern von Bremsflüssigkeit in dem Niederdruckspeicher (12) erlaubt.

7. System nach einem der vorhergehenden Ansprüche, **dadurch gekennzeichnet, dass** der Hochdruckspeicher für Bremsflüssigkeit einen Kolben (19) aufweist, der in einem Zylinder installiert ist, und eine Feder (20), die bei einem Speichern von Bremsflüssigkeit zusammengedrückt wird und daher ein Speichern potentieller Energie erlaubt.

8. System nach Anspruch 7, **dadurch gekennzeichnet, dass** das zweite Verwaltungssystem des Bremsens ferner ein mechanisches Blockiermittel (21) aufweist, das es im Laufe der Deaktivierungsphasen dieses Systems erlaubt, die potentielle mechanische Energie, die in dem Hochdruckspeicher gespeichert ist, zu wahren.

9. System nach Anspruch 8, **dadurch gekennzeichnet, dass** das mechanische Blockiermittel einen Stift aufweist, der fest mit dem Körper des Bremsflüssigkeitsspeichers verbunden ist und im Laufe der Deaktivierungsphasen des zweiten Verwaltungssystems des Bremsens das Blockieren des Bewegens des Kolbens in die Richtung eines Dekomprimierens der Feder erlaubt.

10. System nach Anspruch 8, **dadurch gekennzeichnet, dass** das mechanische Blockiermittel Folgendes aufweist:
- eine Zahnstange, die mit dem Kolben des Hochdruckspeichers für Bremsflüssigkeit verbunden ist,
- ein Ritzel in Verbindung mit der Zahnstange und fest mit einem freien Rad, das zu einer Bremse gehört, verbunden.

11. System nach Anspruch 2, **dadurch gekennzeichnet, dass** es einen Lösekreislauf aufweist, der eine Rückschlagklappe (7) aufweist, die parallel zu dem Bremsflüssigkeit-Einlasskreislauf installiert und direkt mit der Steuervorrichtung derart verbunden ist, dass ein von dem Bremskreislauf unabhängiger Kreislauf gebildet wird.

12. Bremsverwaltungsverfahren, das dazu bestimmt ist, in einem Bremssystem mit hydraulischer Steuerung umgesetzt zu werden, das in einem Kraftfahrzeug installiert ist, wobei das Verfahren die folgenden Schritte aufweist:
- Bestimmen eines Hydraulikdrucks, der zum Anlegen auf ein Bremselement (9), das auf einem Rad eines Fahrzeugs installiert ist, um die Stabilität und die Steuerung der Bahn des Fahrzeugs sicherzustellen, erforderlich ist,
- Vergleichen eines effektiv auf das Bremselement mit dem erforderlichen Druck angelegten Drucks und, wenn dieser Druck niedriger ist als der erforderliche Druck, elektronisches Steuern des Aktivierens eines Verwaltungssystems,
wobei dieses Bremssystem einen Hochdruckspeicher (19, 20) für Bremsflüssigkeit aufweist, der über einen Bremskreislauf mit dem auf dem Rad (9) installierten Bremselement verbunden ist, und wobei das Verfahren ferner beim Aktivieren des Bremssystems die folgenden Schritte aufweist:
- Bestimmen eines hydraulischen Drucks, der dank der in dem Hochdruckspeicher (19, 20) gespeicherten Energie potentiell verfügbar ist, und
- wenn dieser Druck kleiner ist als der erforderliche Druck, Steuern einer Umleitung der Bremsflüssigkeit, die aus diesem Hochdruckspeicher (19, 20) stammt, zu einem hydraulischen Verstärker (15), der parallel zu dem System hydraulischer Kanalisationen installiert ist.

13. Bremsverwaltungsverfahren nach Anspruch 12, das einen Vorabschritt des teilweisen oder kompletten Aufladens des Hochdruckspeichers aufweist, wobei dieses Aufladen bei einer Aktion des Fahrers auf ein erstes Verwaltungssystem des Bremsen, das in dem Fahrzeug installiert ist, ausgeführt wird.

14. Bremsverwaltungsverfahren nach Anspruch 13, wobei der hydraulische Druck, der dank der in dem Hochdruckspeicher gespeicherten potentiell verfügbaren Energie ausgehend von der Messung berechnet wird, die von einem Bewegungssensor geliefert wird, der es erlaubt, die Position des Kolbens (19) des Hochdruckspeichers zu kennen.

15. Fahrzeug, das ein Bremssystem nach einem der Ansprüche 1 bis 11 aufweist.
